# EUROPEAN PATENT APPLICATION

(11) **EP 4 607 175 A1**
(43) Date of publication of application: **27.08.2025**
(21) Application number: 23912495.1
(22) Date of filing: 18.10.2023
(51) Int. Cl.: G01N 3/18, G01N 17/00, F28D 21/00, F28D 1/03

(54) **HYDROGEN EMBRITTLEMENT TESTING APPARATUS HAVING HEAT EXCHANGER**

(30) Priority: 26.12.2022 KR 20220184862
(71) Applicant: Energyn Inc., Hwaseong-si, Gyeonggi-do 18543 (KR)
(72) Inventor: HWANG, Ihn Kee, Hwaseong-si Gyeonggi-do 18543 (KR)
(74) Representative: AWA Sweden AB
(86) International application number: PCT/KR2023/016136
(87) International publication number: WO 2024/143814

(57) **Abstract**

The present invention relates to a hydrogen embrittlement testing apparatus having a heat exchanger, the apparatus being for testing stress corrosion cracking of a specimen according to hydrogen embrittlement. The hydrogen embrittlement testing apparatus having a heat exchanger, according to an embodiment of the present invention, comprises: a test chamber having, therein, a test space to which hydrogen is supplied; a fixing jig to which a specimen brought into the test chamber is fixed; a tension rod for tensioning the specimen fixed to the fixing jig; and a heat exchanger, which is provided in the test chamber and allows heat exchange between hydrogen and a heating medium, so that hydrogen and a heating medium, that are supplied into the test chamber, undergo heat exchange such that the temperature of the hydrogen is adjusted. Therefore, hydrogen rapidly undergoes heat exchange such that heat exchange performance can be improved.

## Description

### [Technical Field]

The present invention relates to a hydrogen embrittlement testing apparatus including a heat exchanger, which is configured to test for stress corrosion cracking of a test piece due to hydrogen embrittlement.

### [Background Art]

Generally, when metals are subjected to tensile stress in a corrosive environment, cracks may form without plastic deformation. This phenomenon is referred to as stress corrosion cracking.

Stress corrosion cracking is generally classified into two types: corrosion caused primarily by hydrogen embrittlement and active stress corrosion which involves metal deformation due to either residual or applied stress.

Since active stress corrosion occurs due to the characteristics of the material's microstructure, tests related to active stress corrosion may be conducted with a test piece exposed to the atmosphere. However, because hydrogen embrittlement testing must be conducted in a hydrogen atmosphere, the test must be carried out in a hydrogen chamber.

A conventional device for testing hydrogen embrittlement has been disclosed in Korean Registered Patent Publication No. 10-2154632 (published on September 10, 2020), titled "Hydrogen embrittlement testing apparatus for Metals".

The above-mentioned conventional hydrogen embrittlement testing apparatus for metals includes a housing which has a circular cavity that is open at one side and an installation hole formed in the bottom thereof; a test piece holding member fixedly coupled to the installation hole, one end of the test piece holding member holding one end of a metal test piece and being positioned in the cavity and the other end of the holding member being positioned outside the housing; a piston movably installed in the cavity, the other end of the metal test piece being held in a region of the piston facing the test piece holding member; a cover member coupled to the housing to close the cavity; and a connecting member which is coupled at one end thereof to the piston through the cover member in a hermetically sealed state and is positioned outside the cover member and connected to a tensile tester at the other end thereof, wherein a tensile test for the metal test piece is performed in a hydrogen atmosphere by connecting the other end of the connecting member to one side of the tensile tester or connecting the other end of the connecting member to one side of the tensile tester while connecting the other end of the test piece holding member to the other side of the tensile tester and then supplying hydrogen to the cavity.

In the conventional hydrogen embrittlement testing apparatus for metals, to measure changes in characteristics of metals under a hydrogen atmosphere, a metal test piece is installed in the housing, high pressure hydrogen is supplied to the cavity in the housing, and the metal test piece is pulled.

However, the conventional hydrogen embrittlement testing apparatus for metals has problems in that a heating medium is supplied to the housing to control the temperature of hydrogen, which reduces thermal insulation from the outside and deteriorates the heat exchange efficiency of the hydrogen. Moreover, because the heating medium must exchange heat with the entire housing, it is difficult to quickly control the temperature of the hydrogen.

In addition, because hydrogen is injected into the interior of the housing, there is a problem of hydrogen leakage when hydrogen embrittlement occurs in the housing.

In addition, because a holding jig is installed at an additional frame, there is a problem in that the additional jig increases the overall size of the equipment and results in the need for a large installation space.

### [Disclosure]

### [Technical Problem]

Therefore, the present invention has been made in view of the above problems, and it is an object of the present invention to provide a hydrogen embrittlement testing apparatus including a heat exchanger in which the heat exchanger configured to exchange heat with hydrogen is installed in a test chamber in order to easily control the temperature of the hydrogen charged in the test chamber and to improve heat exchange capability by minimizing heat loss.

Furthermore, it is an object of the present invention to provide a hydrogen embrittlement testing apparatus including a heat exchanger in which the heat exchanger is manufactured by forming flow channels in a plurality of heat exchange plates, stacking the plurality of heat exchange plates and performing diffusion bonding of the plurality of heat exchange plates, thereby making it possible to manufacture a heat exchanger having a minimized size and to easily manufacture a heat exchanger having a shape optimized for heat exchange.

In addition, it is an object of the present invention to provide a hydrogen embrittlement testing apparatus including a heat exchanger in which a rod support is provided at a test chamber to support a holding jig without installing a frame configured to support the holding jig, thereby minimizing the volume of the apparatus and a space required for installation.

Furthermore, it is an object of the present invention to provide a hydrogen embrittlement testing apparatus including a heat exchanger in which a test chamber is installed in an outer vessel in order to prevent leakage of hydrogen and in which an inner liner made of a material having hydrogen embrittlement resistance is installed in the outer vessel in order to prevent damage to the outer vessel caused by hydrogen embrittlement.

### [Technical Solution]

In order to solve the above-mentioned problems, an embodiment of the present invention provides a hydrogen embrittlement testing apparatus including a heat exchanger, which includes a test chamber having a test space therein to which hydrogen is supplied, a holding jig configured to hold a test piece introduced into the test chamber, a tensile rod configured to pull the test piece held by the holding jig, and the heat exchanger provided in the test chamber to exchange heat between the hydrogen supplied to an inside of the test chamber and heating medium to thus control temperature of the hydrogen.

The heat exchanger may be constructed such that flow channels, through which the heating medium flows, are formed a plurality of heat exchange plates through grinding or etching and the plural heat exchange plates are stacked on one another and coupled to each other through diffusion bonding.

Each of the heat exchange plates may include a heat exchange fin projecting outwards to improve heat exchange with the hydrogen.

The heat exchanger may have an overall circular shape so as to be received in the test space, and each of the flow channels and the heat exchange plates may circumferentially extend in a zig-zag manner in the test space to form an overall circular shape.

The hydrogen embrittlement testing apparatus may include an outer vessel receiving the test chamber therein in order to endure pressure of the hydrogen required for supply of the hydrogen under a predetermined pressure and to prevent leakage of the hydrogen to the outside.

The hydrogen embrittlement testing apparatus may include an inner liner provided on an inner circumferential surface of the outer vessel and having hydrogen embrittlement resistance in order to prevent damage to the outer vessel caused by hydrogen embrittlement.

The hydrogen embrittlement testing apparatus may include an insulator surrounding the test space in the test chamber to insulate the test space.

The test chamber may include a rod support configured to support the holding jig at the test chamber.

The test chamber may include a port formed through a side surface of the test chamber to communicate with the test space in order to allow a test piece to be introduced into and taken out of the test chamber.

### [Advantageous effects]

According to the present invention, because the heat exchanger through which heating medium flows is installed in the test chamber, it is possible to quickly exchange heat with the hydrogen charged in the test space and thus to quickly control the temperature of the hydrogen, and, because heat exchange is performed in the test space, it is possible to minimize heat loss and thus to improve heat exchange capability.

Furthermore, because the heat exchanger is constructed by stacking a plurality of heat exchange plates each having a flow channel formed therein and coupling the plurality of heat exchange plates to each other through diffusion bonding, it is possible not only to minimize the size of the heat exchanger and install the heat exchanger in the test chamber but also to easily manufacture the heat exchange plates each having a shape capable of producing optimal heat exchange capability in the test space.

In addition, it is possible not only to prevent leakage of hydrogen supplied to the test space because the outer vessel is installed outside the test chamber but also to prevent damage to the outer vessel caused by hydrogen embrittlement because the inner liner is provided on the inner surface of the outer vessel.

Furthermore, because the holding jig is supported by the rod support of the test chamber, it is possible to minimize the volume of the equipment and the installation space without having to install an additional frame.

### [Description of Drawings]

FIG. 1 is an exploded perspective view of the hydrogen embrittlement testing apparatus including a heat exchanger according to an embodiment of the present invention;
FIG. 2 is an exploded perspective view of a test chamber constituting the hydrogen embrittlement testing apparatus including the heat exchanger according to an embodiment of the present invention;
FIG. 3 is a side cross-sectional view of the hydrogen embrittlement testing apparatus including the heat exchanger according to an embodiment of the present invention;
FIG. 4 is a perspective view of the heat exchanger constituting the hydrogen embrittlement testing apparatus including the heat exchanger according to an embodiment of the present invention; and
FIG. 5 is a plan view of heat exchange plate constituting the hydrogen embrittlement testing apparatus including the heat exchanger according to an embodiment of the present invention.

### [Best Mode]

Hereinafter, an embodiment of the present invention will be described with reference to the accompanying drawing.

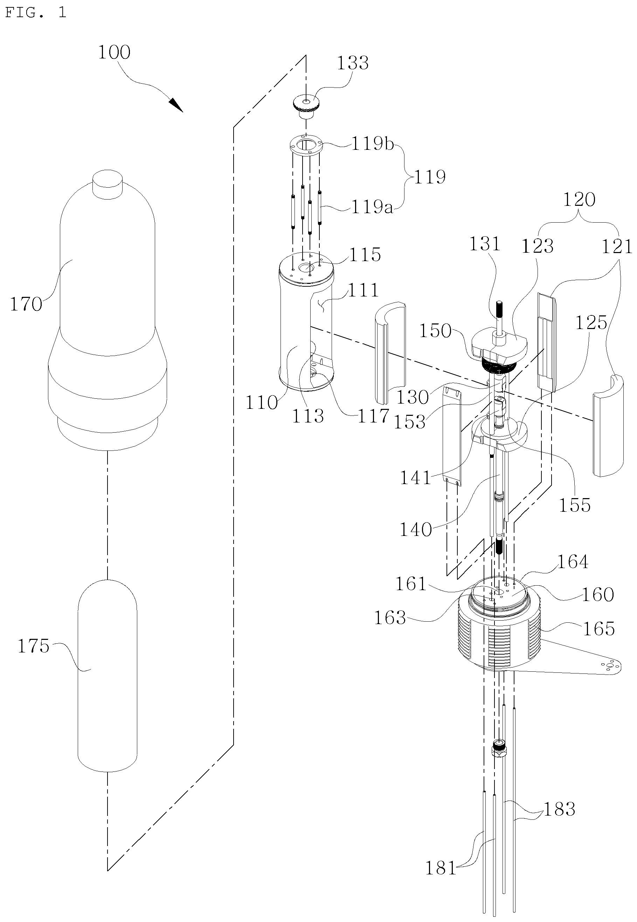

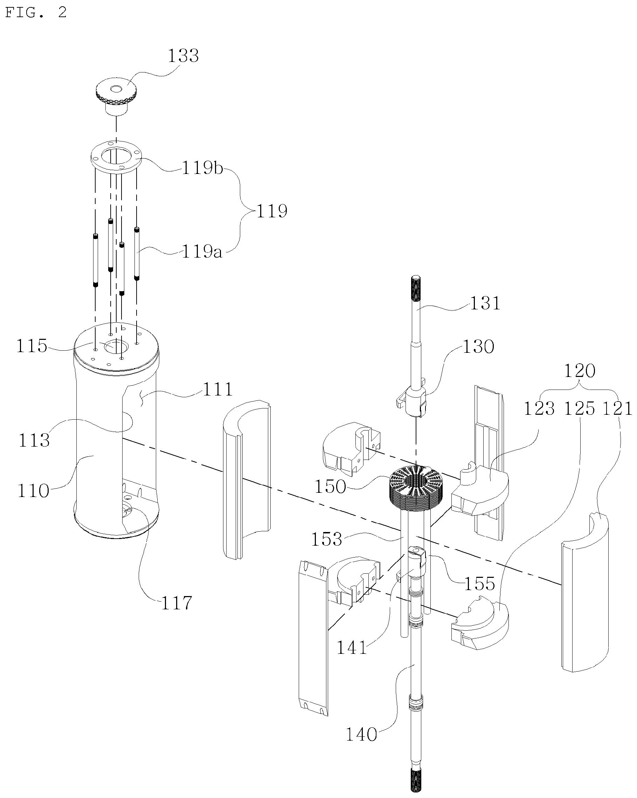

As illustrated in FIGs. 1 to 3, a hydrogen embrittlement testing apparatus 100 including a heat exchanger according to an embodiment of the present invention may include a test chamber 110.

The test chamber 110 may have a test space 111 configured to receiving therein a test piece having a predetermined size to perform hydrogen embrittlement test using the test piece.

Here, the hydrogen embrittlement testing apparatus may be an apparatus configured to test changes of a test piece caused by hydrogen embrittlement in such a way that the test piece is pulled under hydrogen circumstance and deformation of the test piece is observed. The hydrogen embrittlement test may be an SSRT (Slow Strain Rate Test) or a CERT (Constant Elongation Rate Test).

The test chamber 110 may be constructed to have the form of a hollow cylinder. One side or two opposite sides of the periphery of the test chamber 110 may be provided with a port 113 which communicates with the test space of the test chamber 110 such that a test piece is introduced into and taken out of the test chamber 110 through the port 113.

The test chamber 110 may be constructed to have a form in which an upper crown of a press device, a lower crown of the press device and a column configured to support the upper crown and the lower crown are integrally formed with one another.

A rod support 119 may be provided at the upper portion of the test chamber 110 such that a holding jig 130 to be described later, which is configured to hold a test piece, passes through the upper portion of the test chamber 110 and is positioned in the test space 111.

The rod support 119 may include a support boss 119 and a boss plate 119b. The support boss 119a may include a plurality of support bosses erected from the upper portion of the test chamber 110. The boss plate 119b may be coupled to the upper portions of the plurality of support bosses 119a so as to connect the plurality of support bosses 119a to each other.

Here, the boss plate 119b may be perforated in the center thereof to form an upper rod hole 115 through which the holding jig 130 is inserted so as to be positioned in the test space 111.

The upper rod hole 115 may be formed through the upper portion of the test chamber 110 such that the holding jig 130 passes through the upper rod hole 115 from the rod support 119 positioned above the test chamber 110 so as to be positioned in the test space 111. A lower rod hole 117 may be formed through the lower portion of the test chamber 110 such that a tensile rod 140 to be described later projects into and is retracted from the test space 111 through the lower rod hole 117 to apply and release tensile force to and from the test piece.

The test chamber 110 may be made of a material having excellent hydrogen embrittlement resistance, for example, stainless steel, titanium, austenitic metal, martensitic metal, an alloy including these metals, or synthetic resin.

As illustrated in FIGs. 1 to 3, the hydrogen embrittlement testing apparatus 100 including a heat exchanger according to an embodiment of the present invention may include a thermal insulator 120.

The thermal insulator 120 may insulate the inside of the test space 111 from the outside to maintain the temperature of the inside of the test space 111 constant.

The thermal insulator 120 may surround the periphery of the test space 111 to insulate the test space 111 from the outside.

The thermal insulator 120 may be constituted by a plurality of segments which are coupled to each other so as to surround the test space 111.

For example, the thermal insulator 120 may include a side insulator 121, a lower insulator 125, and an upper insulator 123. The side insulator 120 may include a plurality of side insulators which surrounds the periphery of the test space 111. The upper insulator 123 may hermetically seal the upper open portion of the test space 111 surrounded by the side insulator 121, and the lower insulator 125 may hermetically seal the lower open portion of the test space 111 surrounded by the side insulator 121.

Here, the side insulator 121 may not only insulate the inner periphery of the test space 111 but also hermetically seal the port 113 formed through the periphery of the test chamber 110, thereby completely insulating the test chamber 110 from the outside.

Of course, among the plurality of side insulators 121, the side insulator 121 positioned at the port 113 may be detachably coupled to the test chamber 110 such that a test piece is introduced into and taken out of the test space 111 through the port 113.

Each of the upper insulator 123 and the lower insulator 125 may be divided into right and left insulator segments. The right and left upper insulator segments 123 may be coupled to each other so as to insulate the upper portion of the test space 111, and the right and left lower insulator segments 125 may be coupled to each other so as to insulate the lower portion of the test space 111.

The thermal insulator 120 may be made of a metal having high thermal insulation or a material, such as synthetic resin, which has high thermal insulation and hydrogen embrittlement resistance.

As illustrated in FIGs. 1 to 3, the hydrogen embrittlement testing apparatus 100 including a heat exchanger according to an embodiment of the present invention may include the holding jig 130 and the tensile rod 140.

The holding jig 130 may hold a test piece. The holding jig 130 may be positioned in the test space 111, and may include a holding rod 131. The holding jig 130 may be installed at one end of the holding rod 131 so as to be positioned in the test space 111, and the other end of the holding rod 131 may project upwards from the boss plate 119b through the upper rod hole 115 in the test space 110.

The holding jig 130 may further include a rod adjustment member 133.

The rod adjustment member 133 may be installed at the end of the holding rod 131, which extends through the support plate, in order to adjust the height of the holding jig 130 in the test space 111 by adjusting the height of the holding rod 131 with respect to the support plate.

The other end of the holding rod 131 may be provided with a threaded portion, and the rod adjustment member 133 may be threadedly fastened to the threaded portion of the holding rod 131. Accordingly, when the rod adjustment member 133 is rotated relative to the holding rod 131, the holding rod 131 may be moved vertically by virtue of the threaded engagement, thereby adjusting the height of the holding jig 130 in the test space 111.

Here, because the holding jig 130 is supported by the rod support 119 above the test chamber 110, there is no need to install an additional frame supporting the holding jig 130, thereby minimizing the volume of the testing apparatus.

The tensile rod 140 may extend through the lower rod hole 117 in the test chamber 110 such that one end of the tensile rod 140 is positioned in the test space 111 so as to face the holding jig 130 and the other end of the tensile rod 140 is positioned at a lower portion of the test chamber 110.

The tensile rod 140 may be movable upwards and downwards in the test space 111 by means of a pulling device such as a pneumatic cylinder or a hydraulic cylinder. The tensile rod 140 may perform hydrogen embrittlement test by pulling a test piece coupled to the holding jig 130.

A tensile jig 141, which corresponds to the holding jig 130, may be installed at the one end of the tensile rod 140 positioned in the test space 111 so as to firmly grip the test piece.

For example, one end of the test piece is held by the holding jig 130, and the other end of the test piece is held by the tensile jig 141. Accordingly, hydrogen embrittlement test may be formed by gradually pulling the tensile rod 140 and the test piece coupled thereto.

Each of the holding rod 131 and the tensile rod 140 may be embodied as various types of known jigs capable of firmly gripping and holding the test piece.

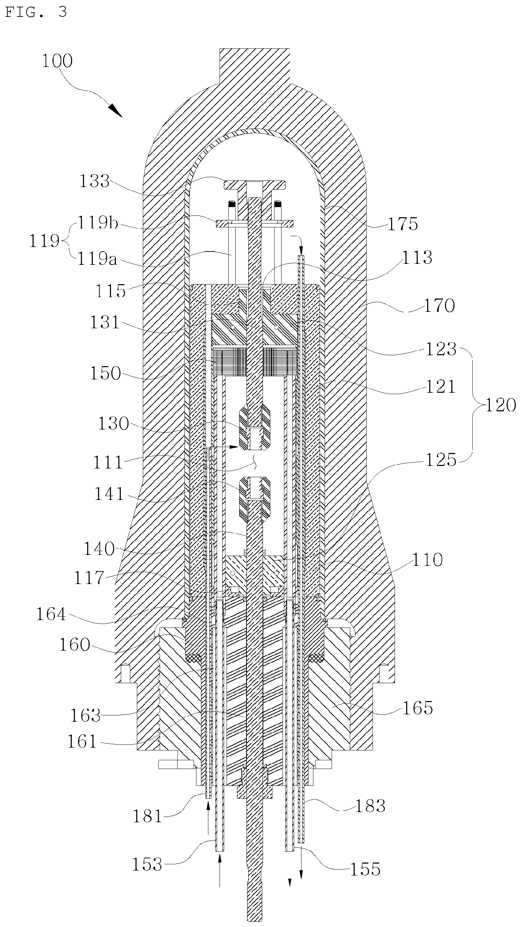

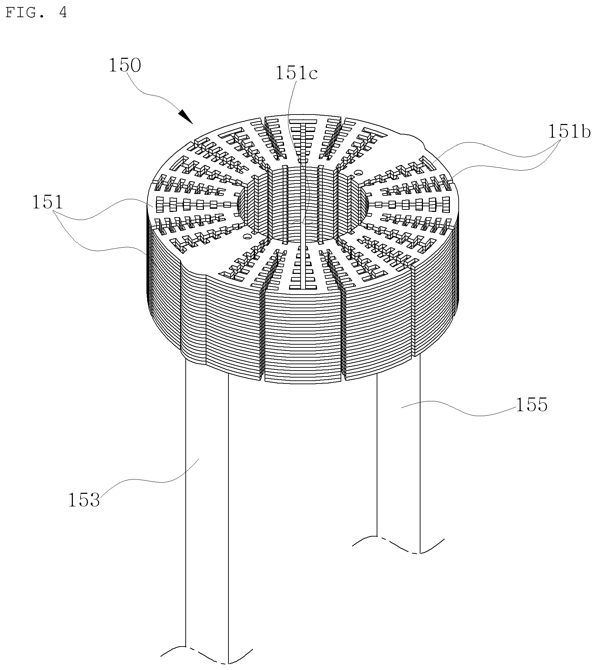

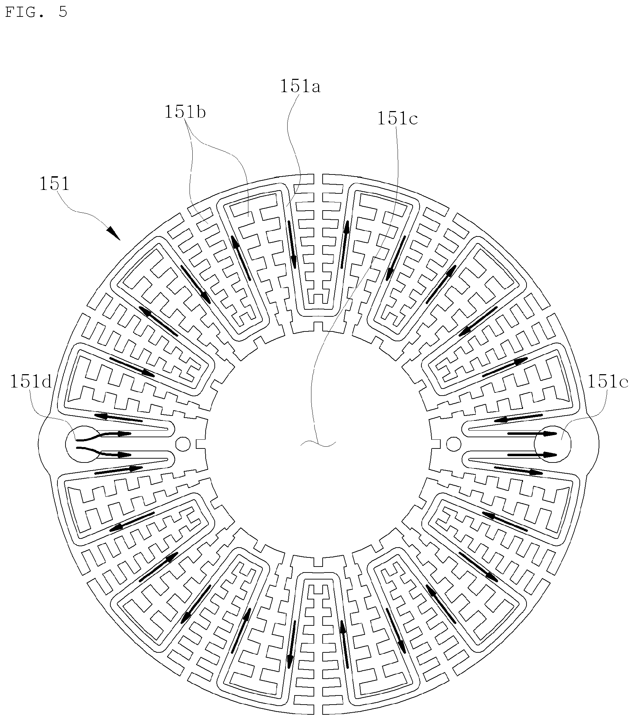

As illustrated in FIGs. 3 to 5, the hydrogen embrittlement testing apparatus 100 according to an embodiment of the present invention may include a heat exchanger 150.

The heat exchanger 150 enables the hydrogen supplied to the inside of the test chamber 110 to exchange heat with heating medium, thereby controlling the temperature of the hydrogen or keeping the temperature of the hydrogen constant during hydrogen embrittlement testing.

The heat exchanger 150 may be positioned in the test space 111 to exchange heat with hydrogen in the test space 111. A heating medium capable of exchanging heat with hydrogen may be supplied to the heat exchanger 150.

In a typical hydrogen embrittlement testing apparatus, the heat exchanger 150 is positioned outside the test chamber 110, and hydrogen having exchanged heat is introduced into the test chamber 110. Here, because the hydrogen having exchanged heat exchanges heat with the outside while moving to the test chamber 110 through a pipe and thus the temperature of the hydrogen varies, there are problems in that it is difficult to maintain the hydrogen at a uniform temperature, heat exchange efficiency is deteriorated due to heat loss during movement of the hydrogen, and it is impossible to quickly change the temperature of the hydrogen.

In contrast, according to the present invention, because the heat exchanger 150 is positioned in the test chamber 110, it is possible to quickly exchange heat with hydrogen, minimize heat loss, and control the temperature of the hydrogen.

The heating medium may be fluid or gas.

The heat exchanger 150 may be provided with a medium inlet 151d to which heating medium is supplied and a medium outlet 151e through which the heating medium having exchanged heat is discharged. The heat exchanger 150 may be a PCHE (Printed Circuit Heat Exchanger) which is manufactured by forming a flow channel in a plurality of heat exchange plates 151 through etching or grinding, stacking the plurality of heat exchange plates 151, and performing diffusion bonding of the plurality of heat exchange plates 151.

Here, the diffusion bonding may be performed by stacking a plurality of heat exchange plates 151 and pressing the plurality of heat exchange plates 151 under a predetermined pressure to bond the plurality of heat exchange plates using diffusion of atoms. Consequently, it is possible to improve bonding ability between the heat exchange plates 151, thus preventing leakage of heating medium.

In addition to the method of bonding the plurality of heat exchanger plates 151 to each other using diffusion bonding, the plurality of heat exchange plates 151 may also be bonded to each other by passing a fixing pin through the plurality of heat exchange plates 151 and engaging a nut with the end of the fixing pin so as to prevent the plurality of heat exchange plates 151 from being separated from each other.

When the heat exchanger 150 is embodied as a PCHE, it is possible to easily manufacture the heat exchanger 150 in desired shape and size. Accordingly, it is possible to miniaturize small-sized equipment such as the hydrogen embrittlement testing apparatus 100 including the heat exchanger according to the embodiment.

In the heat exchanger 150, a medium supply pipe 153 may be connected to the medium inlet 151d and a medium discharge pipe 155 may be connected to the medium outlet 151e such that heating medium is supplied to the heat exchanger 150 from the outside of the test chamber 110 and the supplied heating medium is discharged to the outside of the test chamber 110.

Here, medium pipe holes 163 may be formed through the lower portion of the test chamber 110 such that the medium discharge pipe 155 and the medium supply pipe 153 extend through the medium pipe holes 163.

The heat exchanger 150 may be positioned at an upper portion of the test space 111. A through-hole 151c may be formed through the center of the heat exchanger 150 such that the holding rod 131 extends through the through-hole 151c.

Each of the heat exchange plates 151 may be provided with a plurality of heat exchange fins 151b which project from the heat exchange plate to improve heat exchanging capability with the outside.

The heat exchanger 150 may be constructed to have the form of an overall circular cylinder corresponding to the periphery of the test space 111.

The flow channel 151a formed in each of the heat exchange plates 151 may be formed in a zig-zag manner in order to improve heat exchange capability. According to the embodiment, in addition to the flow channel 151a formed in a zig-zag manner, the heat exchange plate 151 may circumferentially extend in a zig-zag manner around the central through hole 151c so as to form an overall circular shape, thereby improving the heat exchange capability of the heat exchanger 150.

For example, the heat exchange plate 151 may circumferentially extend in a zig-zag manner to form a circular shape and the flow channel 151a may be formed along the zig-zag-shaped heat exchange plate 151 in order to minimize the distance between the hydrogen to be heat-exchanged and the flow channel 151a through which heating medium flows, thereby improving heat exchange capability.

Here, the plurality of heat exchange fins 151b may project from two opposite sides of the zig-zag-shaped heat exchange plate 151 and may be arranged along the zig-zag-shaped heat exchange plate 151.

The medium inlet 151d to which heating medium is supplied may be formed in one side of the heat exchange plate 151 and the medium outlet 151e may be formed in the opposite side of the medium inlet 151d such that the heating medium supplied to the medium inlet 151d is circumferentially branched into two streams, flows through the zig-zag-shaped flow channel 151a, and is discharged from the medium outlet 151e positioned opposite the medium inlet 151d.

As illustrated in FIGs. 1 to 3, the hydrogen embrittlement testing apparatus 100 including the heat exchanger according to an embodiment of the present invention may include an outer vessel 170 and an inner liner 175.

The outer vessel 170 may be formed in a container shape configured to receive the test chamber 110 therein.

The outer vessel 170 may prevent hydrogen from the test chamber 110 from being discharged to the outside. The outer vessel 170 may be formed in a container shape with an open lower end.

The upper portion of the interior of the outer vessel 170 may be curved so as to be convex upwards such that the pressure of hydrogen is uniformly exerted on the interior. Accordingly, it is possible to prevent breakage of the outer vessel 170 caused by local concentration of pressure.

The outer vessel 170 may have a relatively great thickness sufficient to endure the pressure of hydrogen supplied for hydrogen embrittlement testing.

The inner periphery of the lower portion of the outer vessel 170 may be provided with a threaded portion in order to threadedly fasten a vessel cap 160 to the inner periphery of the lower portion of the outer vessel 170.

The outer vessel 170 may be movable in an upward-and-downward direction by means of a drive device. Accordingly, the outer vessel 170 may be raised upwards to a level above the test chamber so as to expose the test chamber 110 to the outside when a test piece is introduced into or taken out of the test chamber 110, or the outer vessel 170 may be lowered in the state in which the test chamber 110 is raised so as to receive the test chamber 110 therein.

The inner liner 175 may have a container shape corresponding to the inner circumferential surface of the outer vessel 170, and may be fitted into or coupled to the inner circumferential surface of the outer vessel 170. The inner liner 175 may be made of a material having hydrogen embrittlement resistance in order to prevent damage to the outer vessel 170 caused by hydrogen embrittlement.

Of course, the inner liner 175 may not be a container structure but be formed by applying a material having hydrogen embrittlement resistance to the inner surface of the outer vessel 170.

As illustrated in FIGs. 1 to 3, the hydrogen embrittlement testing apparatus 100 including the heat exchanger according to an embodiment of the present invention may include the vessel cap 160.

The vessel cap 160 may hermetically seal the lower open end of the outer vessel 170.

The test chamber 110 may be seated and installed on the vessel cap 160. A fastening cap 165 may be rotatably installed to the circumferential surface of the vessel cap 160 in order to rotatably mount and remove the vessel cap 160. The outer circumferential surface of the fastening cap 165 may be provided with a threaded portion which is threadedly engaged with the threaded portion formed on the inner circumferential surface of the lower portion of the outer vessel 170.

The vessel cap 160 may have formed therethrough a cap rod hole 161 through which the tensile rod 140, which is moved in an upward-and-downward direction by means of the pulling device positioned under the lower portion of the vessel cap 160. The medium pipe holes 163, through which the medium supply pipe 153 and the medium discharge pipe 1551 respectively extend, may be formed around the cap rod hole 161.

Furthermore, hydrogen pipe holes 164 through which a hydrogen supply pipe 181, configured to supply hydrogen to the test space 111, and a hydrogen discharge pipe 183, configured to discharge the supplied hydrogen, respective extend may be formed through the vessel cap 160.

The vessel cap 160, which overlaps the outer vessel 170 in the state in which the outer vessel 170 is hermetically sealed by means of the vessel cap 160, may be provided with a vessel seal configured to prevent leakage of hydrogen between the outer vessel 170 and the vessel cap 160. The cap rod hole 161 in the vessel cap 160 through which the tensile rod 140 configured to be moved in an upward-and-downward direction extends may be provided with a pressure seal configured to hermetically seal the gap between the tensile rod 140 and the cap rod hole 161.

Of course, a cap seal may also be provided between the vessel cap 160 and the fastening cap 165 rotatably coupled to the vessel cap 160 in order to prevent leakage of hydrogen therethrough.

Here, the vessel seal, the cap seal and the pressure seal may be made of a material having hydrogen embrittlement resistance, or may be made of a material or metal having elasticity.

As illustrated in FIGs. 1 to 3, the hydrogen embrittlement testing apparatus 100 including the heat exchanger according to an embodiment of the present invention may include the hydrogen supply pipe 181 and the hydrogen discharge pipe 183.

The hydrogen supply pipe 181 may supply hydrogen to the test space 111 to cause generation of hydrogen embrittlement in a test piece.

The hydrogen supply pipe 181 may include a plurality of hydrogen supply pipes which project into the test space 111 through the hydrogen pipe holes 164 in the vessel cap 160.

Here, the hydrogen supply pipe 181 may vertically extend through the side insulator 121 in order to prevent the hydrogen supply pipe 181 from being exposed to the test space 111, and a communication hole may be formed in the side insulator 121 so as to communicate with the test space 111 and thus to allow the hydrogen supplied to the hydrogen supply pipe 181 to be supplied to the test space 111.

The hydrogen discharge pipe 183 may discharge the hydrogen supplied to the test space 111 to the outside of the outer vessel 170 upon completion of the hydrogen embrittlement test. One end of the hydrogen discharge pipe 183 may be positioned in the internal space in the outer vessel 170 and the other end of the hydrogen discharge pipe 183 may be connected to an external hydrogen tank through the hydrogen pipe hole 164 in the vessel cap 160 such that the hydrogen supplied to the test space 111 is collected to the hydrogen tank through the outer vessel 170.

Of course, the hydrogen discharge pipe 183, which extends through the vessel cap 160, may extend through the side insulator 121 such that one end of the hydrogen discharge pipe 183 is positioned in the internal space in the outer vessel 170.

Operation and effects of the above-described components will now be described.

In the hydrogen embrittlement testing apparatus 100 including the heat exchanger according to an embodiment of the present invention, the test chamber 110 may be provided therein with the test space 111 for test of hydrogen embrittlement of a test piece, and the port 113 may be formed through the circumferential surface of the test chamber 110 so as to allow a test piece to be introduced into and taken out of the test space 111.

The test space 111 in the test chamber 110 may be insulated by means of the thermal insulator 120. The thermal insulator 120 may include the upper insulator 123 configured to insulate the upper portion of the test chamber 110, the side insulators 121 which are assembled with each other to insulate the side periphery of the test chamber 110, and the lower insulator 125 configure to insulate the lower portion of the test chamber 110, which are assembled with one another to insulate the entire test space 111.

Here, among the plurality of side insulators 121, the side insulator 121 corresponding to the port 113 may be detachably coupled to the port 113 so as to open and close the test space 111.

The rod support 119 configured to support the holding jig 130 configured to hold a test piece may be provided at the upper portion of the test chamber 110. The rod support 119 may be constructed in such a way that the boss plate 119b is coupled to the plurality of support bosses 119a.

The holding jig 130 may be positioned in the test space 111. One end of the holding rod 131 may be coupled to the holding jig 130, and the other end of the holding rod 131 may extend through the upper rod hole 115 and the boss plate 119b so as to be positioned in the test chamber 110. The end of the holding rod 131 having passed through the boss plate 119b may be threadedly engaged with the rod adjustment member 133 which adjusts the height of the holding rod 131 in the test space 111 through rotation thereof.

The tensile rod 140 may extend through the lower rod hole 117 in the test chamber 110 and may be positioned in the test space 111 so as to apply tensile force to a test piece for hydrogen embrittlement testing. The end of the tensile rod 140 positioned in the test space 111 may be provided with the tensile jig 141 configured to hold the test piece together with the holding jig 130.

The end of the tensile rod 140 opposite the end coupled to the tensile jig 141 may be connected to the pulling device configured to apply tensile force to the tensile rod 140 to pull the test piece.

The test space 111 may be provided therein with the heat exchanger 150 configured to exchange heat between the hydrogen supplied to the test space 111 and the heating medium. The heat exchanger 150 may be constructed in such a way that a flow channel 151a is formed in each of a plurality of heat exchange plates 151 through etching or grinding and the plurality of heat exchange plates 151 are stacked and coupled to each other through diffusion bonding.

Each of the plurality of heat exchange plates 151 may be formed to have an overall circular shape. The medium inlet 151d to which heating medium is supplied may be formed in one side of the periphery of the heat exchange plate 151, and the medium outlet 151e through which the heating medium is discharged may be formed in the opposite side of the periphery of the heat exchange plate 151. The heat exchange plate 151 may circumferentially extend in a zig-zag manner from the medium inlet 151d to the medium outlet 151e.

Similar to the heat exchange plate 151 formed in a zig-zag manner, the flow channel 151a may also be circumferentially formed in the heat exchange plate 151 in a zig-zag manner according to the shape of the heat exchange plate 151. The heat exchange fins 151b may project along the zig-zag shape of the heat exchange plate 151 to increase a contact area with hydrogen and to improve heat exchange capability with hydrogen.

The medium supply pipe 153 configured to supply heating medium may be installed to the medium inlet 151 and may extend downwards therefrom. The medium discharge pipe 155 through which the heating medium supplied to the heat exchanger 150 and having exchanged heat with hydrogen is discharged may be installed to the medium outlet 151e and may extend downwards therefrom.

The test chamber 110 may be inserted into and positioned in the outer vessel 170 with the lower end thereof being open. The inner circumferential surface of the outer vessel 170 may be provided with the inner liner 175 configured to prevent generation of hydrogen embrittlement in the outer vessel 170.

The lower open end of the outer vessel 170 may be hermetically sealed by means of the vessel cap 160. The fastening cap 165 may be rotatably coupled to the vessel cap 160. Here, the fastening cap 165 may be threadedly engaged with the threaded portion formed on the inner circumferential surface of the lower portion of the outer vessel 170.

The cap rod hole 161 may be formed through the center of the vessel cap 160 so as to allow the tensile rod 140 to be slidably moved in an upward-and-downward direction. The rod seal may be provided between the cap rod hole 161 and the tensile rod 140 to hermetically seat the gap therebetween, and the cap seal may be provided between the vessel cap 160 and the fastening cap 165 to hermetically seal the gap therebetween.

The outer vessel 170 may be moved in an upward-and-downward direction by means of the drive device such that the test chamber 110 installed to the vessel cap 160 is exposed to the outside or the test chamber 110 is inserted into the outer vessel 170 and is thus hermetically sealed.

The medium supply pipe 153 and the medium discharge pipe 155 of the heat exchanger 150 may extend downwards through the medium pipe holes 163 in the vessel cap 160. The medium supply pipe 153 may be connected to the medium supply tank configured to supply heating medium, and the medium discharge pipe 155 may be connected to the medium supply tank. Consequently, the heating medium may be circulated between the heat exchanger 150 and the medium supply tank while being heated or cooled.

The hydrogen pipe holes formed in the vessel cap 160 may be connected to the hydrogen supply pipe 181 configured to supply hydrogen to the test space 111 from the hydrogen supply and to the hydrogen discharge pipe 183 configured to discharge the hydrogen supplied to the outer vessel 170 to the outside.

The hydrogen supply pipe 181 may supply the hydrogen stored in the hydrogen storage tank to the test space 111 under a predetermined pressure using pressure of the hydrogen supply pump. When the hydrogen embrittlement test is completed in the state in which hydrogen is supplied to the test space 111, the hydrogen in the outer vessel 170 may be sucked out and discharged to the hydrogen storage tank by means of the hydrogen supply pump in order to prevent leakage of the hydrogen.

In the hydrogen embrittlement testing device 100 including the heat exchanger according to an embodiment of the present invention, in order to expose the test chamber 110 to the outside, the fastening cap 165 may be rotated to release the engagement between the outer vessel 170 and the vessel cap 160, and the outer vessel 170 may then be raised upwards by means of the drive device.

When the outer vessel 170 is raised upwards and the test chamber 110 is thus exposed to the outside, the side insulator 121 which is closing the port 113 may be separated from the port 113 in the test chamber 110 to open the test chamber 111, and a test piece may be held between the holding jig 130 and the tensile jig 141.

Here, after the distance between the holding jig 130 and the tensile jig 141 is adjusted by rotating the rod adjustment member 133 positioned above the test chamber 110 to adjust the height of the holding rod 131 by virtue of the threaded coupling therebetween, a test piece may be installed between the holding jig 130 and the tensile jig 141.

When the test piece is installed between the holding jig 130 and the tensile jig 141, the side insulator 121 which is opening the port 113 in the test chamber 110 may hermetically cover the port 113, and the outer vessel 170 may be moved downwards by means of the drive device.

When the outer vessel 170 is moved downwards, the test chamber 110 may be inserted into the outer vessel 170. Subsequently, the outer vessel 170 may be hermetically sealed by means of the vessel cap 160, and the fastening cap 165 may be rotated by means of the drive device to fasten the vessel cap 160 to the outer vessel 170.

When hydrogen is supplied through the hydrogen supply pipe 181 in this state, the hydrogen may be charged into the test chamber 110 and may be supplied to the test space 111 under a predetermined pressure.

Because the outer vessel 170 is hermetically sealed, hydrogen can be supplied to the test space 111 without leakage of the hydrogen to the outside. Furthermore, because the inner liner 175 is provided on the inner surface of the outer vessel 170, it is possible to prevent generation of hydrogen embrittlement in the outer vessel 170.

When there is a need to maintain the hydrogen in the test chamber 110 at a uniform temperature or to change the temperature of the hydrogen after the hydrogen is supplied to the test space 111, heating medium, which is previously heated or cooled, may be supplied to the medium supply pipe 153 and then to the medium inlet 151d of the heat exchanger 150.

The heating medium supplied to the medium inlet 151d may exchange heat with the hydrogen to change the temperature of the hydrogen while flowing through the flow channel 151a of the heat exchange plate 151. Subsequently, the heating medium may be discharged to the outside through the medium outlet 151e of the heat exchange plate 151 and the medium discharge pipe 155, thereby regulating the temperature of the hydrogen.

The heat exchange plate 151 may circumferentially extend in a zig-zag manner, and the flow channel 151a may also circumferentially extend in a zig-zag manner along the shape of the heat exchange plate 151. Furthermore, the heat exchange fins 151b may be formed to project from the heat exchange plate 151 so as to increase the contact area between the heat exchange plate and the hydrogen to thus improve heat exchange capability. Accordingly, the heating medium may optimally exchange heat with hydrogen while flowing along the flow channel corresponding to the internal shape of the test chamber 110.

Subsequently, in order to perform hydrogen embrittlement test of a test piece while maintaining the temperature of the hydrogen constant or changing the temperature of the hydrogen by means of the heat exchanger 150, tensile force may be applied to the test piece by pulling the tensile rod 140 downwards by means of the pulling device.

After the tensile force is applied to the test piece, the test piece may be tested in a such a way as to measure or observe change of tensile force applied to the test piece caused by generation of hydrogen embrittlement.

When the hydrogen embrittlement test for the test piece is completed, the hydrogen supplied to the inside of the outer vessel 170 may be discharged to the outside of the outer vessel 170 through the hydrogen discharge pipe 183 in order to prevent leakage of the hydrogen charged in the outer vessel 170. After completion of the discharge of the hydrogen, the fastening cap 165 may be rotated by means of the drive device to release the engagement between the outer vessel 170 and the vessel cap 160. Subsequently, the outer vessel 170 is raised upwards so as to expose the test chamber 110 to the outside, and the side insulator 121 may be separated from the port 113 so as to allow the test piece, which has been tested, to be removed, thereby completing the hydrogen embrittlement test for the test piece.

Of course, the test may also be formed in such a way as to observe the structure of the test piece which has been recovered after completion of the hydrogen embrittlement test.

Accordingly, in the hydrogen embrittlement testing apparatus 100 including the heat exchanger according to an embodiment of the present invention, the heat exchanger 150 may be provided in the test chamber 110 in order to maintain the temperature of the hydrogen charged in the test chamber 110 constant or to change the temperature of the hydrogen. Consequently, it is possible not only to minimize heat loss caused by heat exchange but also to perform hydrogen embrittlement test while quickly adjusting the temperature of hydrogen.

Furthermore, because the heat exchanger 150 is constructed such that a plurality of heat exchanger plates 151, each of which has a flow channel 151a formed therein, are stacked on one another and coupled to each other through diffusion bonding, it is possible to minimize the volume of the heat exchanger 150 and to install the heat exchanger 150 in the test space 111 having a relatively small size. Furthermore, because the heat exchange plate 151 is easily formed in various shapes, it is possible to manufacture the heat exchanger 150 in a shape having the optimal heat exchange efficiency according to the shape of the test space 111.

Furthermore, because the rod support 119 configured to support the holding jig 130 is provided at the upper portion of the test chamber 110 without having to install an external frame configured to support the holding jig 130, it is possible to minimize the size of the entire apparatus.

In addition, because the test chamber 110 is installed in the outer vessel 170, it is possible to prevent leakage of hydrogen and to supply hydrogen under high pressure. Furthermore, because the inner liner 175 is provided on the inner circumferential surface of the outer vessel 170, it is possible to prevent damage to the outer vessel 170 caused by generation of hydrogen embrittlement.

Although the embodiment of the invention has been described, the scope of the present invention is not limited thereto and may include any and all modifications and variations which are easily changed from the embodiment of the present invention by those skilled in the art to which the present invention belongs and which are considered to be equivalents by those skilled in the part.

### [DESCRIPTION OF REFERENCE NUMERALS]

| | | | |
|---|---|---|---|
| 100: | Hydrogen embrittlement testing apparatus | | |
| 110: | Test chamber | | |
| 111: | Test space | 113: | Port |
| 115: | Upper rod hole | 117: | Lower rod hole |
| 119: | Rod support | 119a: | Support boss |
| 119b: | Boss plate | 120: | Thermal insulator |
| 121: | Side insulator | 123: | Upper insulator |
| 125: | Lower insulator | 130: | Holding jig |
| 131: | Holding rod | 133: | Rod adjustment member |
| 140: | Tensile rod | 141: | Tensile jig |
| 150: | Heat exchanger | 151: | Heat exchange plate |
| 151a: | Flow channel | 151b: | Heat exchange fin |
| 151c: | Through hole | 151d: | Medium inlet |
| 151e: | Medium outlet | 153: | Medium supply pipe |
| 155: | Medium discharge pipe | 160: | Vessel cap |
| 161: | Cap rod hole | 163: | Medium pipe hole |
| 164: | Hydrogen pipe hole | 165: | Fastening cap |
| 170: | Outer vessel | 175: | Inner liner |
| 181: | Hydrogen supply pipe | 183: | Hydrogen discharge pipe |

## Claims

1. A hydrogen embrittlement testing apparatus comprising a heat exchanger, comprising:
a test chamber having a test space therein to which hydrogen is supplied;
a holding jig configured to hold a test piece introduced into the test chamber;
a tensile rod configured to pull the test piece held by the holding jig; and
the heat exchanger provided in the test chamber to exchange heat between the hydrogen supplied to an inside of the test chamber and heating medium to thus control temperature of the hydrogen.

2. The hydrogen embrittlement testing apparatus according to claim 1, wherein the heat exchanger is constructed such that flow channels, through which the heating medium flows, are formed a plurality of heat exchange plates through grinding or etching and the plurality of heat exchange plates are stacked on one another and coupled to each other through diffusion bonding.

3. The hydrogen embrittlement testing apparatus according to claim 2, wherein each of the heat exchange plates comprises a heat exchange fin projecting outwards to improve heat exchange capability with the hydrogen.

4. The hydrogen embrittlement testing apparatus according to claim 2, wherein the heat exchanger has an overall circular shape so as to be received in the test space, and
wherein each of the flow channels and the heat exchange plates circumferentially extends in a zig-zag manner in the test space to form an overall circular shape.

5. The hydrogen embrittlement testing apparatus according to claim 1, comprising an outer vessel receiving the test chamber therein in order to endure pressure of the hydrogen required for supply of the hydrogen under a predetermined pressure and to prevent leakage of the hydrogen to an outside.

6. The hydrogen embrittlement testing apparatus according to claim 5, comprising an inner liner provided on an inner circumferential surface of the outer vessel and having hydrogen embrittlement resistance in order to prevent damage to the outer vessel caused by hydrogen embrittlement.

7. The hydrogen embrittlement testing apparatus according to claim 1, comprising an insulator surrounding the test space in the test chamber to insulate the test space.

8. The hydrogen embrittlement testing apparatus according to claim 1, wherein the test chamber comprises a rod support configured to support the holding jig at the test chamber.

9. The hydrogen embrittlement testing apparatus according to claim 1, wherein the test chamber comprises a port formed through a side surface of the test chamber to communicate with the test space in order to allow a test piece to be introduced into and taken out of the test chamber.
